Europäisches Patentamt

European Patent Office

Office européen des brevets

(11) Publication number:

**0 381 357**
**A1**

# EUROPEAN PATENT APPLICATION

(21) Application number: 90300696.3

(22) Date of filing: 23.01.90

(51) Int. Cl.5: **F16L 47/06, F16L 21/04**

(30) Priority: 26.01.89 GB 8901731

(43) Date of publication of application:
**08.08.90 Bulletin 90/32**

(84) Designated Contracting States:
**AT BE CH DE DK ES FR GB GR IT LI LU NL SE**

(71) Applicant: **CARADON TERRAIN LIMITED**
**Aylesford**
**Maidstone, Kent ME20 7PJ(GB)**

(72) Inventor: **Parker, Robert William**
**17 Tower Lane**
**Bearsted, Maidstone, Kent(GB)**

(74) Representative: **Rushton, Ronald et al**
**SOMMERVILLE & RUSHTON 11 Holywell Hill**
**St. Albans Hertfordshire AL1 1EZ(GB)**

(54) Pipe couplings.

(57) In a piping system having pipes (1,2) connected in end to end relationship by pipe couplings of the socket and spigot type in which the spigot (4) is push fitted into the socket (5) and an annular sealing member (6) extends between the spigot (4) and socket (5), the pipe couplings can be selectively locked up so that the spigot (4) and socket (5) cannot move relatively to each other under thermal expansion and contraction. The coupling also has a cap (7) for retaining the sealing member (6), the cap (7) being push fitted on to the outside of the socket (5) to a snap fit position on the socket (5). Rotation of the cap (7) in its snap fit position causes the coupling to lock up by jamming the sealing member (6) against the spigot (4).

FIG.2

## Pipe Couplings

This invention relates to pipe couplings of the socket and spigot type used for joining pipes in end to end relationship. Such couplings are commonly used in domestic soil and waste systems.

When the pipes are formed from synthetic plastics material temperature changes in the environment of the pipes causes relatively large movements of the pipes due to thermal expansion and contraction of the pipes. The object of the present invention is to provide a pipe coupling which enables the installer of a system in which the pipe couplings are used to predetermine the positions at which expansion can occur in the system.

According to one aspect of the present invention a pipe coupling of the above type, and in which the spigot is a push fit in the socket, and an annular sealing member extends between the socket and pipe and is retained by a cap which is push fitted on to the outside of the socket to a snap fit position on the socket, is characterised in that the cap in its snap fitted position is rotatable about the socket to cause the pipe coupling to lock up so that the spigot and socket cannot move longitudinally relatively to each other under thermal expansion and contraction.

Thus with the feature of selective lockability as provided by the invention the installer of a system can predetermine at which of the pipe couplings if any he is going to allow expansion movement to take place.

In order to effect the locking in one embodiment of the invention, the rotation of the cap causes it to be drawn along the socket to cause the pipe coupling to lock up. The sealing member may be provided with a cylindrical extension which by rotation of the cap becomes jammed between the outer surface of the spigot and the socket assembly.

According to another aspect of the invention, a piping system comprising a plurality of pipes jointed in end to end relationship by pipe couplings of the socket and spigot type and in which the spigot is a push fit in the socket and an annular sealing member extends between the socket and spigot is characterised in that the pipe couplings can be selectively locked up so that in a locked-up coupling the spigot and socket cannot move longitudinally relatively to each other under thermal expansion and contraction.

A spigot and socket coupling in accordance with the invention will now be described by way of example with reference to the accompanying diagrammatic drawings in which:

Figure 1 shows a half longitudinal section through the spigot and socket coupling with the coupling in an unlocked condition,

Figure 2 shows a similar view to Figure 1 but with the coupling in a locked condition,

Figure 3 shows a perspective view of the socket part of the socket assembly, and

Figure 4 shows a perspective view of the cap forming part of the socket assembly.

In the drawings a first plastics pipe 1 is shown coupled to a second plastics pipe 2 through a pipe coupling comprising a socket assembly 3 at the end of pipe 2 and a spigot 4 formed by the end of pipe 1.

The socket assembly 3 comprises a socket 5 which in this example, is moulded separately from the pipe 2 and bonded or welded to it. It could of course be moulded integrally with it. It also comprises an annular rubber sealing member 6 which locates within an annular recess in the socket 5, and a plastics cap 7 which is a snap fit on the outside of the socket 5 and retains the sealing member 6 in the socket recess. To effect the snap fit the cap member 7 has a lip 12 at its rim which defines an internal sloping shoulder 13 and the socket 5 has an annular external rib 14 defining shoulder 15. The cap 7 is fitted to the socket 5 by pushing it over the front end of the socket 5 so that the lip 12 rides over the surface of the rib 14 and in so doing stresses the cap 7. Eventually the cap 7 snaps past the rib 14 and is thus located in position by the shoulder 15 provided by the rib 14 abutting the shoulder 13. The sealing member 6 is provided with sealing ribs 8 for sealing with the outside of the spigot 4. It also has a cylindrical extension 9 beyond the free end of the socket 5.

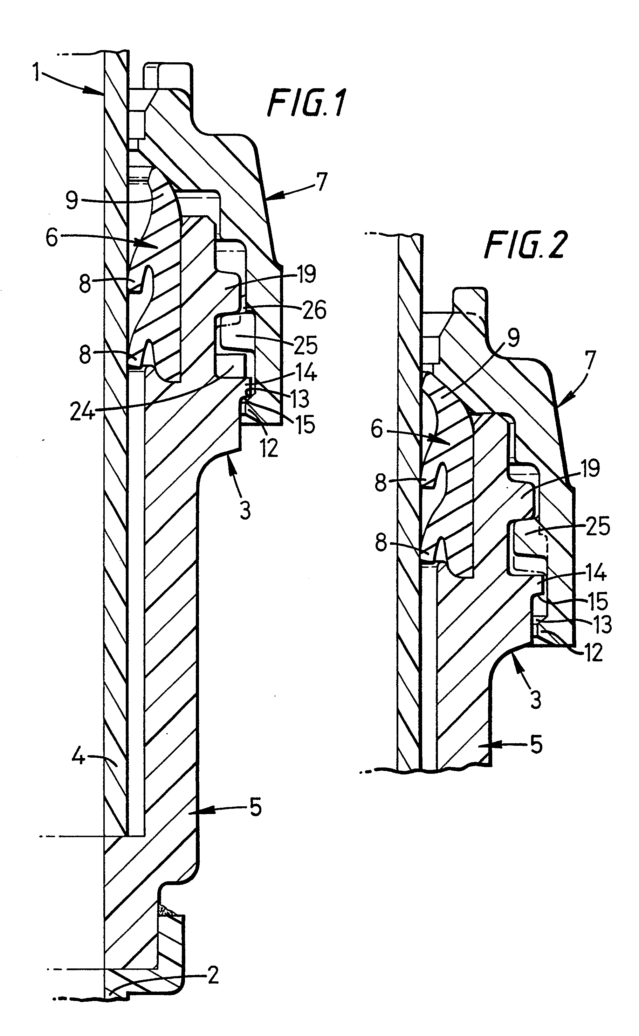

When the lip 12 of the cap 7 has been snapped past the rib 14 the coupling is in the position of Figure 1. As it is moved to this position the engagement of the internal surface of the cap with the cylindrical extension 9 of the sealing member 6 causes deformation of the sealing member 6 and so tightens the seal between the spigot 4 and socket 5.

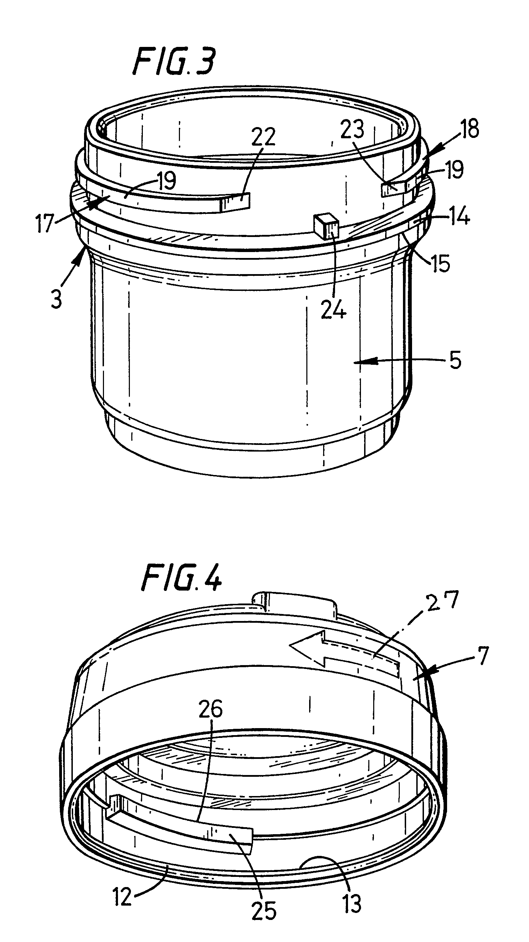

The socket 5 is provided with two external ramps 17 and 18 which are diametrically opposite each other. These ramps 17 and 18 comprise rectagular sectioned ribs 19 the lower surface 20 of which provides a ramp surface. Proceeding clockwise as seen from above in Figure 3 the ramp surfaces 20 slope downwardly from a high end 22 (visible for the ramp 17) to a low end 23 (visible for the ramp 18). The low end 23 of the one ramp is spaced from the high end 22 of the other ramp as seen in Figure 3. Mid-way between the ends of the ramps and displaced longitudinally therefrom towards the rib 14 is a small block 24.

The cap 7 is provided with two diametrically opposed elongated lugs 25 which extend circumferentially around the inner surface of the cap 7 at a distance from its rim. The circumferential length of each of the lugs is slightly less than the spacing between the ends of the ramps 17 and 18. The upper surfaces 26 of the lugs 25 provide ramp surfaces for sliding engagement with the ramp surfaces 20. The ramp surfaces 26 have the same slope as the ramp surfaces 20 and are so handed that when the cap 7 is fitted to the socket 5 the ramp surfaces 20 are parallel to the ramp surfaces 26.

When the cap 7 is pushed on to the socket 5 to its snap fit position of Figure 1 the lugs 25 pass between the ramps 17 and 18 so that the lugs 25 become located in the space between the ramps 17 and 18 and the rib 14. The blocks 24 will limit this movement by abutment with the lugs 25. The coupling is then in the position of Figure 1. With the coupling in the position shown in Figure 1, relative longitudinal movement between the socket 5 and spigot 4 is possible to accommodate thermal expansion and contraction.

Rotation of the cap 7 on the socket 5 from this position in a clockwise direction as seen in Figure 3, i.e. in the direction of arrow 27 on the cap, will cause the lugs 25 to ride along the ramp surfaces 20 to effectively screw the cap 7 further on to the socket 5, i.e. to the position shown in Figure 2. This causes the end portion 28 of the cap to engage and deform the cylindrical extension 9 of the sealing member 6 so that it becomes jammed between the cap 7 and the spigot 4. Thus the coupling becomes locked up and relative longitudinal movement between the socket 5 and spigot 4 is not possible.

**Claims**

1. A pipe coupling of the socket and spigot type and in which the spigot (4) is a push fit in the socket (5) of a socket assembly (3) which also comprises an annular sealing member (6) extending between the socket (5) and spigot (4) and a cap (7) for retaining the sealing member (6) and which is push fitted on to the outside of the socket (5) to a snap fit position characterised in that the cap (7) in its snap fitted position is rotatable about the socket (5) to cause the pipe coupling to lock up so that the spigot (4) and socket (5) cannot move relatively to each other under thermal expansion and contraction.

2. A pipe coupling according to claim 1, characterised in that co-operating means (17,18,25) are provided on the socket (5) and cap (7) such that when the cap (7) is rotated in its snap fitted position it is drawn longitudinally on to the socket (5) beyond its snap fitted position to cause the pipe coupling to lock up.

3. A pipe coupling according to claim 2, characterised in that the co-operating means (17,18,25) provide co-operating sloping ramp surfaces (20,26) on the socket (5) and cap (7) and which slide over each other as the cap (7) is rotated about the socket (5).

4. A pipe coupling according to claim 3, characterised in that the sloping ramp surfaces (20,26) are provided by spaced circumferentially extending ribs (19) on the external surface of the socket (5) and spaced circumferentially extending lugs (25) on the internal surface of the cap (7), the spacing between the adjacent ends of the ribs (19) being sufficiently greater than the circumferential extent of the lugs (25) that the lugs (25) pass between the ribs (19) as the cap (7) is pushed to its snap fitted position.

5. A pipe coupling according to any preceding claim, characterised in that the pipe coupling is locked up by deformation of the sealing member (16) causing it to jam between the socket assembly (3) and the spigot (4).

6. A pipe coupling according to claim 5, characterised in that the sealing member (6) has a cylindrical extension (9) beyond the free end of the socket (5), and the cap (7) engages said extension (9) as it is rotated when in the snap fitted position, to deform said sealing member (6) and cause it to jam between the spigot and socket assembly (3).

7. A piping system comprising a plurality of pipes (1,2) jointed in end to end relationship by pipe couplings of the socket and spigot type and in which the spigot (4) is a push fit in the socket (5) and an annular sealing member (6) extends between the socket (5) and spigot (4), characterised in that the pipe couplings can be selectively locked up such that in a locked-up coupling the spigot (4) and socket (5) cannot move relatively to each other under thermal expansion and contraction.

8. A piping system according to claim 7, and in which the pipe couplings are each of the form claimed in any one of claims 1 to 6.

EP 0 381 357 A1

*FIG.1*

*FIG.2*

EP 0 381 357 A1

*FIG.3*

*FIG.4*

| | DOCUMENTS CONSIDERED TO BE RELEVANT | | EP 90300696.3 |
|---|---|---|---|

| Category | Citation of document with indication, where appropriate, of relevant passages | Relevant to claim | CLASSIFICATION OF THE APPLICATION (Int. Cl.⁵) |
|---|---|---|---|
| Y | DE - A1 - 3 236 120 <br> (WOCO) <br> * Totality * <br> -- | 1-3,5, 6,8 | F 16 L 47/06 <br> F 16 L 21/04 |
| Y | US - A - 4 566 704 <br> (VON DONGEREN) <br> * Totality * <br> -- | 1-3,5, 6,8 | |
| A | US - A - 3 813 115 <br> (FRENCH) <br> * Totality * <br> -- | 1-4,8 | |
| A | GB - A - 2 174 166 <br> (ANTHONY ROY ROBSON) <br> * Totality * <br> -- | 1-3,8 | |
| A | US - A - 3 857 589 <br> (OOSTENBRINK) <br> * Totality * <br> -- | 1,5,6, 8 | |
| A | EP - A2 - 0 188 012 <br> (WAVIN B.V.) <br> * Totality * <br> -- | 1,5,8 | TECHNICAL FIELDS SEARCHED (Int. Cl.⁵) |
| A | DE - A1 - 2 624 425 <br> (MEPWORTH PLASTICS LTD.) <br> * Totality * <br> ---- | 1,8 | F 16 L 21/00 <br> F 16 L 47/00 <br> F 16 L 49/00 |

The present search report has been drawn up for all claims

| Place of search | Date of completion of the search | Examiner |
|---|---|---|
| VIENNA | 02-03-1990 | SCHUGANICH |